Europäisches Patentamt

European Patent Office

Office européen des brevets

(19)

(11) Veröffentlichungsnummer : **0 021 054**
**B1**

(12) **EUROPÄISCHE PATENTSCHRIFT**

(45) Veröffentlichungstag der Patentschrift :
**15.08.84**

(21) Anmeldenummer : **80102873.9**

(22) Anmeldetag : **23.05.80**

(51) Int. Cl.³ : **B 29 D 29/00**, B 29 D 29/02,
B 29 F 3/10, B 29 H 7/22

(54) **Verfahren und Vorrichtung zur kontinuierlichen Herstellung von armierten Profilbändern.**

(30) Priorität : **16.06.79 DE 2924357**

(43) Veröffentlichungstag der Anmeldung :
**07.01.81 Patentblatt 81/01**

(45) Bekanntmachung des Hinweises auf die Patenterteilung : **15.08.84 Patentblatt 84/33**

(84) Benannte Vertragsstaaten :
**BE CH FR GB IT LI NL SE**

(56) Entgegenhaltungen :
**DE-A- 2 123 902**
**DE-A- 2 526 691**
**DE-B- 1 246 216**
**DE-B- 1 935 438**
**DE-B- 2 013 345**

(73) Patentinhaber : **Norddeutsche Seekabelwerke**
**Aktiengesellschaft**
**Kabelstrasse**
**D-2890 Nordenham (DE)**

(72) Erfinder : **Rabenecker, Klaus, Ing. grad.**
**Bernhardstrasse 80**
**D-2890 Nordenham (DE)**

(74) Vertreter : **Bolte, Erich, Dipl.-Ing.**
**Hollerallee 73**
**D-2800 Bremen (DE)**

EP 0 021 054 B1

## Beschreibung

Die Erfindung betrifft ein Verfahren zur Herstellung von armierten Profilbändern gemäß dem Oberbegriff des Anspruchs 1. Des weiteren betrifft die Erfindung eine Vorrichtung zur Durchführung des Verfahrens nach Anspruch 1 gemäß dem Oberbegriff des Anspruchs 2.

Bei Profilriemen, insbesondere Zahnriemen, die einer hohen Beanspruchung gewachsen sein sollen, ist es wichtig, daß eine innige Verbindung zwischen dem Material des Riemenkörpers und den zur Eröhung der Riemenbelastung dienenden Einlagen bzw. dem Material der Einlagen besteht. Weiterhin ist eine eindeutige Fixierung der Einlage in der neutralen Zone des Riemens notwendig. Schließlich wird eine allseitige Ummantelung der Einlagen durch das Material des Riemenkörpers gefordert.

Aus der DE-AS 20 13 345 ist ein Extruder zur Herstellung armierter Profilbänder bekannt. Bei dieser Vorrichtung gelangt extrudierbares Material zur Herstellung des Riemenkörpers aus dem Extruder durch ein mit demselben verbundenes Düsenrohr und ein sich daran anschließendes Dichtungsstück zwischen zwei im Kreislauf geführten endlosen Hälften einer geteilten Form. Die aus Drahtseilen bestehende Armierung dieses Profilbandes wird der geteilten Form durch das Dichtungsstück laufend zugeführt.

Bei dieser bekannten Vorrichtung findet eine Ummantelung der Drahtseile erst innerhalb der geteilten Form statt. Eine gezielte Kontrolle der Lage der Drahtseile innerhalb des Profilbandkörpers ist hier nicht möglich, weil die Drahtseile mit dem extrudierbaren Material erst innerhalb der geteilten Form zusammenlaufen. Nachteilig ist bei dieser Vorrichtung auch, daß die endlos geführten, umlaufenden Formhälften dichtend am Mundstück vorbeigeführt werden müssen, damit vom Extruder aus der erforderliche Nachdruck in der Form erzeugt werden kann. Damit ist ein permanentes Schleifen zwischen den Formhälften einerseits und dem Mundstück andererseits unvermeidbar.

Ferner ist aus der DE-AS 12 46 216 ein Gesenk zum kontinuierlichen Fertigen eines Isolierrohres bekannt. Bei diesem Gesenk wird ein Leiter eines elektrischen Kabels durch einen Strangpressenkopf hindurchgeführt und dabei mit einem Isolierrohr umspritzt. Letzteres weist jedoch im Gegensatz zum Leiter einen erheblich größeren Durchmesser auf, so daß (zunächst) keine Berührung zwischen dem Leiter und dem Isolierrohr vorhanden ist. Erst in einer nachfolgenden Drückform aus gegenüberliegenden, umlaufenden Bandmatrizen findet eine Einschnürung des Isolierrohres statt, derart, daß bereichsweise sich das Isolierrohr auf dem Leiter abstützt.

Da die Profilform der Isolierung des elektrischen Leiters hier keine primäre Rolle spielt, ist es nicht notwendig, in der Matrize bzw. Form einen Nachdruck aufzubringen. Demzufolge ist bei dieser bekannten Vorrichtung keine Verbindung zwischen dem Strangpressenkopf und der Bandmatrize vorhanden. Diese Vorrichtung bietet nicht die Voraussetzungen zur Herstellung eines profilgenauen, armierten Zahnriemens.

Schließlich ist aus der DE-OS 21 23 902 ein Verfahren zur kontinuierlichen Herstellung von armierten Profilbändern bekannt. Bei diesem Verfahren bilden zwei im Kreislauf geführte, endlose Hälften einer geteilten Form durch Zusammenführen entlang eines Abschnitts ihrer Länge eine geschlossene Form. Am Anfang dieser Form ist das Düsenrohr eines Extruders zwischen ihren zusammengeführten Formhälften abdichtend geführt. Durch eine Extrusionsgeschwindigkeit, die größer als die Fortbewegungsgeschwindigkeit der geschlossenen Form ist, wird vom Extruder aus über das Düsenrohr ein Nachdruck im Formenhohlraum erzeugt.

Wie sich deutlich aus der Fig. 6 und dem Beschreibungstext auf Seite 10, 2. Abs. bis Seite 11, 1. Abs. der DE-OS 21 23 902 ergibt, weist eine die Form bildende Profilscheibe Wickelnasen auf, auf die sich die Verstärkungseinlagen nach dem Austritt aus dem Düsenmundstück auflegen. Diese Ausbildung der Vorrichtung hat den Nachteil, daß am fertigen Profilband, nämlich an den Berührungsstellen der Wickelnasen mit den Verstärkungseinlagen, keine Kunststoffummantelung vorhanden ist, also blanke Berührungsstellen der Verstärkungseinlagen vorhanden sind.

Bei der Ausführungsform gemäß Fig. 3 der genannten Offenlegungsschrift (S. 10, letzte drei Zeilen) soll angeblich durch die Zusatzdüsen Kunststoff auf die Kammfläche gelangen, der dort durch entsprechende Temperierung des Formrades erstarren soll. In der Praxis hat sich aber gezeigt, daß sich nicht vorhersehbare Schwierigkeiten ergeben. So ist es bei der beschriebenen Arbeitsweise nicht zu vermeiden, daß die heiße Armierung sich durch die gerade eben erstarrte dünne Kunststoffschicht hindurchdrückt und damit unmittelbar auf den Kammflächen der Zähne Anlage findet, so daß nach wie vor blanke Stellen vorhanden sind. Außerdem liegt die Einlage dann nicht mehr in der neutralen Zone.

Die Erfindung macht es sich zur Aufgabe, ein Verfahren und eine Vorrichtung der eingangs genannten Art vorzuschlagen, welche frei sind von den Nachteilen, die bisher in Kauf genommen werden mußten.

Zur Lösung dieser Aufgabe weist das erfindungsgemäße Verfahren die kennzeichnenden Merkmale des Anspruchs 1 auf.

Durch das erfindungsgemäße Verfahren ergibt sich der Vorteil einer eindeutigen Fixierung der Armierung bzw. Einlage in der neutralen Zone sowie einer allseitigen Ummantelung derselben mit Kunststoff ohne blanke Stellen.

Der Schwundausgleich ist mit dem erfindungsgemäßen Verfahren einfacher als mit den Verfahren bzw. Vorrichtungen gemäß dem eingangs erwähnten Stand der Technik zu erzielen. Es ist kein paßgenaues und somit teures Mundstück zwischen Extruder und Form notwendig. Darüber hinaus wird ein Verschleiß zwischen den sich bewegenden Formhälften und dem Mundstück wirkungsvoll vermieden. Schließlich ist eine in der Praxis äußerst schwierige Abstimmung der Extrudiergeschwindigkeit des Extruders auf die Länge und die Fortbewegungsgeschwindigkeit der geschlossenen Formteile vermeidbar.

Zur Durchführung des erfindungsgemäßen Verfahrens eignet sich insbesondere eine Vorrichtung mit den kennzeichnenden Merkmalen des Anspruchs 2, wie sie in den beigefügten Zeichnungen beispielsweise schematisch dargestellt ist.

In den Zeichnungen bedeuten

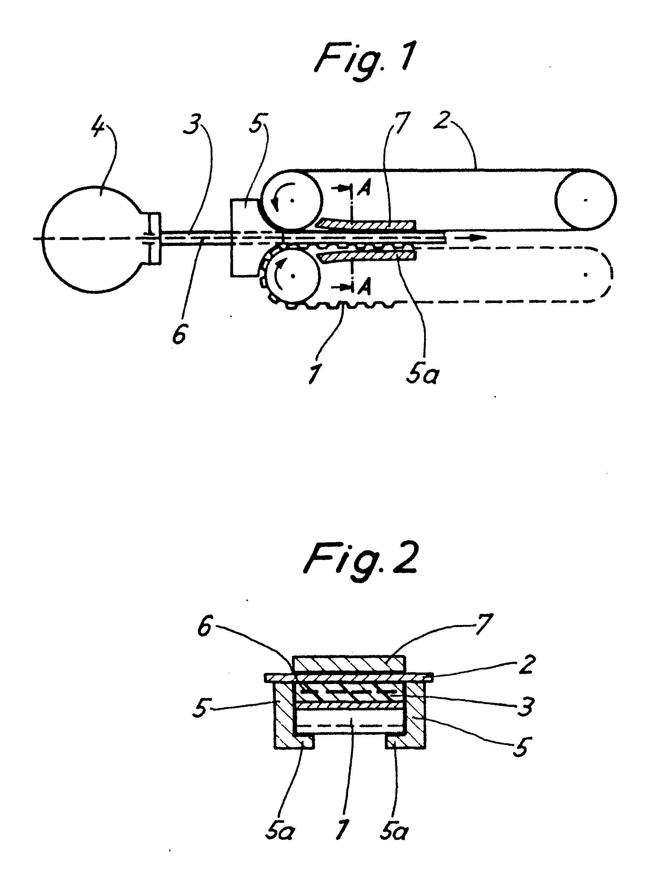

Figur 1 einen Längsschnitt durch eine Vorrichtung zur Durchführung des erfindungsgemäßen Verfahrens und

Figur 2 einen Schnitt entlang der Linie A-A in Fig. 1.

Bei der Durchführung des erfindungsgemäßen Verfahrens tritt aus dem Spritzkopf 4 ein Kunststoffstrom 3 frei aus, wobei eine mit durch den Spritzkopf 4 laufende un dort lagenmässig fixierte bandförmige und zugfeste Einlage 6 allseitig ummantelt wird. Das so entstandene kunststoffummantelte bandförmige Gebilde läuft nach dem freien Heraustreten aus dem Spritzkopf bzw. Extrudierkopf 4 in ein Einmündungsstück 5 ein, welches dicht an die formgebende Zone, die von dem unteren umlaufenden Raupenband 1 und dem oberen umlaufenden glatten Metall- oder Textilband 2 gebildet wird, anschließt. Dabei sind beide Bänder endlos, ohne Glieder, und es können beide Bänder Profile entsprechend dem herzustellenden Profilstrang haben, oder eines der beiden Bänder ist glatt.

Leitbleche 7 und Leitschienen 5a laufen in Transportrichtung konisch zusammen und bewirken den Schwundausgleich durch Volumenverringerung des Materialstranges beim Erkalten. Die Leitschienen 5a sind mit dem Einmündungsstück 5 verbunden. Das Leitblech 7 ist unabhängig von dem Einmündungsstück 5 oberhalb des unteren Trums der oberen Formhälfte starr am Maschinengestell befestigt.

Durch das erfindungsgemäße Verfahren lassen sich armierte Profilbänder mit allseitig ummantelter Einlage sicher und einfach herstellen. Der bei der Herstellung der Bänder erforderliche Schwundausgleich läßt sich ebenfalls in einfacherer Weise erreichen, als dies bei den bereits bekannten Verfahren und Arbeitsweisen möglich ist.

### Ansprüche

1. Verfahren zur kontinuierlichen Herstellung von armierten Profilbändern aus mit einer zugfesten Einlage (6) versehenem, extrudierbarem Material, wobei der extrudierte Materialstrang (2) im Kreislauf geführten endlosen Hälften einer geteilten Form, die durch Zusammenführen entlang eines geradlinigen Abschnitts ihrer Länge eine geschlossene Form bilden, zugeführt wird, dadurch gekennzeichnet, daß eine durch einen Spritzkopf (4) laufende, zugfeste Einlage (6) beim freien Austreten aus dem Spritzkopf (4) allseitig von einem Kunststoffstrom (3) ummantelt wird, die vom Kunststoff ummantelte, zugfeste Einlage (6) zum Fertigformen des Profilbandes unter Spannung in der neutralen Zone des bandförmigen Gebildes liegend durch die Form hindurchgezogen wird, und der Formenhohlraum in seinem Volumen zum Schwundausgleich des erkaltenden Materialstrangs allmählich in Zugrichtung der Einlage (6) verringert wird.

2. Vorrichtung zur Durchführung des Verfahrens nach Anspruch 1 zur kontinuierlichen Herstellung von armierten Profilbändern aus mit einer zugfesten Einlage (6) versehenem, extrudierbarem Material, mit zwei im Kreislauf geführten endlosen Hälften (Metall- oder Textilband 1 ; Raupenband 2) einer geteilten Form, die durch Zusammenführen entlang eines geradlinigen Abschnitts ihrer Länge eine geschlossene Form bilden, dadurch gekennzeichnet, daß in Transportrichtung des Materialstrangs einem Spritzkopf (4) die Form aus einem Raupenband (2) und einem Metall- bzw. Textilband (1) mit einem dicht davor angeordneten Einmündungsstück (5) vorgeordnet ist, und eine Leitschiene (5a) sowie ein Leitblech (7) den Querschnitt der geschlossenen Form zum Schwundausgleich in Transportrichtung allmählich verringern.

### Claims

1. Process for the continuous production of reinforced profile strips from an extrudable material provided with a tension-proof insert (6), the extruded material strand (2) being supplied to the endless halves of a split mould supplied in circuit form and which form a closed mould by bringing together along a linear portion of the length thereof, characterized in that a tension-proof insert (6) passing through an extrusion head (4) is enveloped on all sides by a plastic stream (3) on freely passing out of head (4), the plastic-enveloped, tension-proof insert (6) is drawn horizontally through the mould for completing the profile strip under tension in the neutral zone of the strip-like structure, the volume of the mould cavity being reduced gradually in the pulling direction of insert (6) for the shrinkage compensation of the cooled material strand.

2. Apparatus for performing the process according to claim 1, for the continuous production of reinforced profile strips from extrudable material provided with a tension-proof insert (6), with two endless halves (metal or textile strip 1 ; caterpillar strip 2) of a split mould supplied in circuit manner and which form a closed mould by bringing together along a linear portion of their length, characterized in that in the conveying direction of the material strand is arranged in front of an extrusion head (4) the mould formed from a caterpillar strip (2) and a metal or textile strip (1) with an opening piece (5) arranged just in front of the same, and a guide rail (5a), together with a deflector (7) gradually reduce the cross-section of the closed mould for shrinkage compensation in the conveying direction.

**Revendications**

1. Procédé de fabrication continue de bandes profilées armées en matériau extrudable muni d'une garniture intérieure (6) résistant à la traction, le boudin de matière (2) extrudé étant amené à un moule, subdivisé en deux moitiés sans fin se déplaçant en circuit fermé, et qui, en se réunissant le long d'une section droite de leur longueur, forment un moule fermé, caractérisé par le fait qu'on enveloppe complétement d'un courant de matière plastique (3) une garniture intérieure (6) résistant à la traction, circulant à travers une tête d'extrusion (4), lorsqu'elle sort librement de cette tête, on fait traverser horizontalement au moule la garniture (6) résistant à la traction, enveloppée de matière plastique, pour mouler définitivement la bande profilée sous tension dans la zone neutre de l'article en forme de bande et on réduit en volume la cavité du moule progressivement en direction de traction de la garniture (6) pour compenser le retrait du boudin de matière en cours de refroidissement.

2. Dispositif pour la mise en œuvre du procédé selon la revendication 1 pour la fabrication continue de bandes profilées armées en matériau extrudable muni d'une garniture intérieure (6) résistant à la traction, comportant un moule subdivisé en deux moitiés (bande métallique ou textile 1 ; bande à chenilles 2) qui, en se réunissant le long d'une section droite de leur longueur, forment un moule fermé, caractérisé par le fait qu'en direction de transport du boudin de matière, une tête d'extrusion (4) est disposée en amont du moule, constitué d'une bande à chenilles (2) et d'une bande métallique ou textile (1), auquel est adjointe de façon étanche une pièce formant embouchure (5), et un rail de guidage (5a) ainsi qu'une tôle de guidage (7) réduisent progressivement la section du moule fermé, en direction de transport, pour compenser le retrait.

# Fig. 1

# Fig. 2